(19) Europäisches Patentamt

European Patent Office

Office européen des brevets

(11) **EP 2 644 886 A2**

(12) **EUROPEAN PATENT APPLICATION**

(43) Date of publication:
**02.10.2013 Bulletin 2013/40**

(21) Application number: **13160925.7**

(22) Date of filing: **25.03.2013**

(51) Int Cl.:
*F03D 7/02* *(2006.01)* *F16F 7/00* *(2006.01)*
*E04H 12/00* *(2006.01)*

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **28.03.2012 US 201213432221**

(71) Applicant: **General Electric Company
Schenectady, New York 12345 (US)**

(72) Inventors:
• **Hedeen, Robert Arvin
Niskayuna, NY New York 12309 (US)**
• **Davis, John Paul
Niskayuna, NY New York 12309 (US)**

(74) Representative: **Bedford, Grant Richard
GPO Europe
GE International Inc.
The Ark
201 Talgarth Road
Hammersmith
London W6 8BJ (GB)**

(54) **Systems and methods for attenuating noise in a wind turbine**

(57)    A wind turbine 100 having an attenuating unit 130 is presented. One embodiment of the wind turbine 100 includes a tower 102 and a power unit 104 disposed at a first end of the tower. The wind turbine 100 further includes the attenuating unit 130 that is operatively coupled to at least one of the tower 102 and the power unit 104 and configured to attenuate at least the portion of the vibrational bending waves having a frequency above a threshold frequency to reduce the tonal noise of the wind turbine 100.

FIG. 1

EP 2 644 886 A2

**Description**

The disclosure relates generally to a wind turbine and more specifically to systems and methods for attenuating noise in the wind turbine.

A wind turbine is typically designed to produce electrical energy at a wide spectrum of wind speeds. In general, the electrical energy is produced when wind passes across one or more parts of the wind turbine. The parts may include a gear box, a rotor, and blades of the wind turbine. For example, when wind of sufficient speed passes across the blades, the rotor is rotated to generate electrical energy in a generator. However, the movement or rotation of these parts of the wind turbine may cause undesirable mechanical vibrations in the wind turbine. These undesirable mechanical vibrations may radiate as tonal noise on surfaces of a tower and/or blade of the wind turbine. The tonal noise is produced by an out-of-plane motion that efficiently pumps the surrounding air. Also, since the tonal noise has a relatively high amplitude, the intensity of this noise is above an audible range, and thus the tonal noise may be subject to regulation by environmental and/or zoning laws. Moreover, the tonal noise may warrant reduced turbine operation, fines, and in some cases prohibition of wind turbines in certain areas.

In a conventional wind turbine, a tuned mass absorber (TMA) is used to suppress the mechanical vibrations. The TMA is mounted at the gearbox and is tuned to resonate at a particular frequency of mechanical vibrations propagating across the TMA. Since the TMA is designed to suppress vibrations having a particular frequency, the TMA may not be suitable for suppressing vibrations having a range of frequencies. Also, implementation of the TMA in the wind turbine entails a high cost. For example, implementing the TMA may cost from about 15K dollars to about several hundred thousand dollars.

Briefly in accordance with one aspect of the present disclosure, a wind turbine is presented. The wind turbine includes a tower and a power unit disposed at a first end of the tower. The wind turbine further includes an attenuating unit that is operatively coupled to at least one of the tower and the power unit and configured to attenuate at least the portion of the vibrational bending waves having a frequency above a threshold frequency to reduce the tonal noise of the wind turbine.

In accordance with a further aspect of the present disclosure, a method for reducing tonal noise in a wind turbine is presented. The method includes attenuating vibrational bending waves having a frequency above a threshold frequency by using an adjustable attenuating unit on a structural unit of the wind turbine.

In accordance with another aspect of the present disclosure, an attenuating device for reducing tonal noise in a wind turbine is presented. The attenuating unit includes a support platform configured to fasten the attenuating device to a structural unit of the wind turbine. Also, the attenuating unit includes studs operatively coupled to the support platform and disposed substantially perpendicular to the support platform. In addition, the attenuating unit includes heads operatively coupled to the studs and rotatable along the studs to vary a distance of the heads from the support platform.

Various features, aspects, and advantages of the present invention will become better understood when the following detailed description is read with reference to the accompanying drawings in which like characters represent like parts throughout the drawings, wherein:

FIG. 1 is a perspective view of a wind turbine, in accordance with aspects of the present disclosure;

FIG. 2 is a diagrammatical representation of a cross section of a portion of a tower of the wind turbine of FIG. 1, in accordance with aspects of the present disclosure;

FIG. 3 is a perspective view of a turbine blade of the wind turbine of FIG. 1, in accordance with aspects of the present disclosure;

FIG. 4 is a side view of the turbine blade of FIG. 3 having an exemplary attenuating unit, in accordance with aspects of the present disclosure;

FIG. 5 is a diagrammatical representation of an exemplary blocking mass for use in the attenuating unit of FIG. 4, in accordance with aspects of the present disclosure;

FIG. 6 is a perspective view of a turbine blade with a bearing ring, in accordance with aspects of the present disclosure;

FIG. 7 is a perspective view of a central hub having an exemplary attenuating unit, in accordance with aspects of the present disclosure;

FIG. 8 is a diagrammatical representation of a portion of a tower having an attenuating unit, in accordance with aspects of the present disclosure;

FIG. 9 is a diagrammatical representation of a portion of a tower having an attenuating unit, in accordance with aspects of the present disclosure; and

FIG. 10 is a flow chart illustrating a method for reducing tonal noise in the wind turbine, in accordance with aspects of the present disclosure.

As will be described in detail hereinafter, various embodiments of an exemplary attenuating unit for reducing tonal noise in a wind turbine and methods for reducing tonal noise in a wind turbine are presented. By employing the methods and the various embodiments of the attenuating unit described hereinafter, tonal noise in the wind turbine may be substantially reduced and cost of installing the attenuating unit in the wind turbine may also be dramatically reduced.

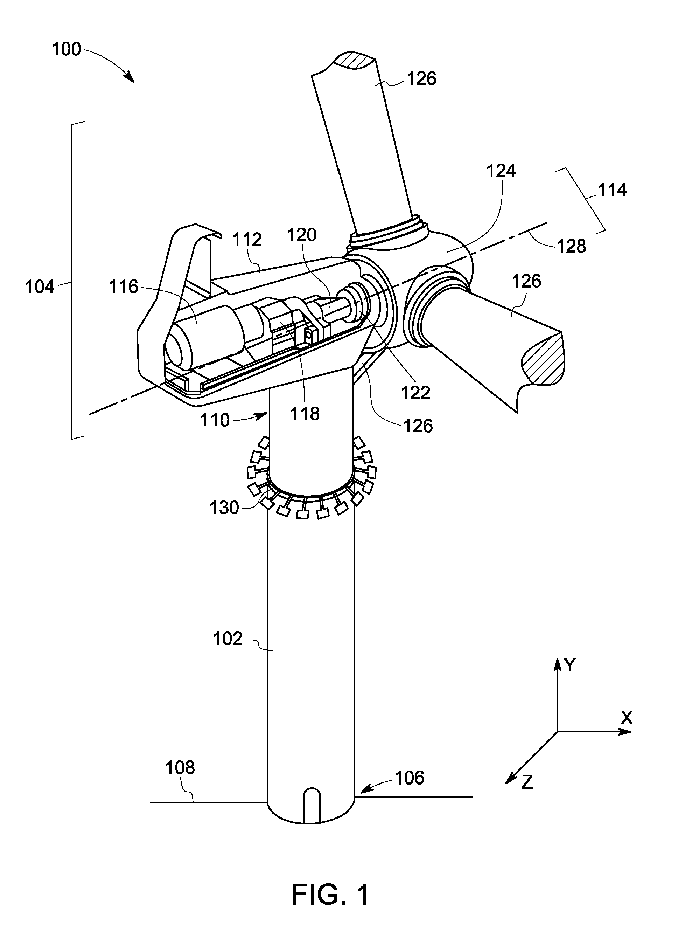

Turning now to the drawings, and referring to FIG. 1, a perspective view of a wind turbine 100, in accordance with aspects of the present disclosure, is depicted. The wind turbine 100 is configured to convert kinetic energy of wind passing across the wind turbine 100 into electrical energy. Particularly, the wind turbine 100 includes a plurality of mechanical moving parts that aids in converting the kinetic energy of the wind into mechanical energy. The mechanical energy is in turn used to generate electrical energy.

In a presently contemplated configuration, the wind turbine 100 includes a tower 102 and a power unit 104. The tower 102 operates to elevate the power unit 104 to a  height above ground level or sea level at which faster moving wind passes across the wind turbine 100. The tower 102 may include a structural beam that is disposed substantially perpendicular to a base or foundation 108. Particularly, the tower 102 may be a cantilevered tower having a lower end 106 rigidly coupled to the base or foundation 108 and an upper end 110 that is free or unsupported. It may be noted that the terms "upper end" and "first end" may be used interchangeably and the terms "lower end" and "second end" may be used interchangeably. As depicted in FIG. 1, the upper end 110 of the tower 102 is configured to support a load presented by the power unit 104 and/or other components of the wind turbine 100.

Further, the power unit 104 may be configured to convert the kinetic energy of the wind into electrical energy. The power unit 104 may include one or more sub- units such as a machine head 112 and a rotor 114. The machine head 112 houses components for converting the mechanical energy of the rotor 114 into electrical energy. Specifically, the machine head 112 houses a generator 116 that is used to generate the electrical energy based on the mechanical energy provided by the rotor 114. In addition to the generator 116, the machine head 112 may also house other components, such as, but not limited to, a gearbox 118 and a rotary shaft 120. The gearbox 118 and the rotary shaft 120 may be configured to operate, control, and/or optimize the performance of the wind turbine 100. Also, the gearbox 118 and the rotary shaft 120 may be coupled to the generator 116, as depicted in FIG. 1.

Moreover, as previously noted, the rotor 114 is configured to convert the kinetic energy of wind passing across the wind turbine 100 into mechanical energy. This converted mechanical energy is further provided to the generator 116 for generating electrical energy. In the presently contemplated configuration, the rotor 114 is operatively coupled to the rotary shaft 120 of the machine head 112 via a bearing assembly 122, as depicted in FIG. 1. The rotor 114 includes a central hub 124 and a plurality of blades 126 that project outwardly from the central hub 124 at locations circumferentially distributed thereabout. In the example depicted in FIG. 1, the central hub 124 is shown as including three blades. However, the number of blades may vary. The blades 126 are configured to interact with passing air flow to produce lift that causes the central hub 124 to rotate about a longitudinal axis 128. Further, by  rotating the central hub 124, the rotary shaft 120 coupled to the central hub 124 also rotates causing the generator 116 to generate electrical energy.

In addition, a power generating plant may include a collection of wind turbines, such as the wind turbine 100. The wind turbines 100 of the power generating plant may be coupled to a power grid (not shown) via one or more transmission lines (not shown). Also, in one example, the power grid may include a three-phase alternating current (AC) power grid. The power grid includes a network of power stations, transmission circuits, and substations. Moreover, the various components of the network may be coupled by one or more transmission lines that transmit the power to loads, which may include customers of electrical utilities.

As will be appreciated, the wind turbine 100 is a complex dynamic system having many mechanical parts, particularly in the power unit 104, operating to convert wind energy into electrical energy. However, while generating the electrical energy, these mechanical parts may cause undesirable vibrations that may propagate along the structural beam of the tower 102 towards the lower end 106 of the tower 102. It may be noted that these undesirable vibrations may be referred to as vibrational bending waves. These vibrational bending waves may have a range of frequencies from about 10 Hz to about 1000 Hz. In general, these vibrational bending waves have an out-of-plane motion that efficiently pumps the surrounding air in a manner similar to a loudspeaker. The sound produced by the vibrational bending waves is referred to as a tonal noise. Since the tonal noise oscillates at a high amplitude, the tonal noise is regulated by environmental and zoning laws.

To address these problems, in accordance with exemplary aspects of the present disclosure, the wind turbine 100 may include an attenuating unit 130 that is configured to attenuate and/or reflect the vibrational bending waves, thereby reducing the tonal noise in the wind turbine 100. The attenuating unit 130 may be mounted on the tower 102 and/or the power unit 104. In one example, the tower 102 may include one or more structural beams. The attenuating unit 130 may be disposed on one or more structural beams of the tower 102, in one embodiment. In another example, the turbine blades 126 may include one or more structural plates. The attenuating unit 130 may be disposed on one or more structural plates of the turbine blades 126, in one embodiment. Moreover, as depicted in the embodiment of FIG. 1, the attenuating unit 130 may be disposed on one structural beam at the upper end 110 of the tower 102 that receives the vibrational bending waves from the power unit 104. In one example, the attenuating unit 130 may be fastened to the tower 102 by a bolt or a screw. In another example, the attenuating unit 130 may be welded or glued to the tower 102.

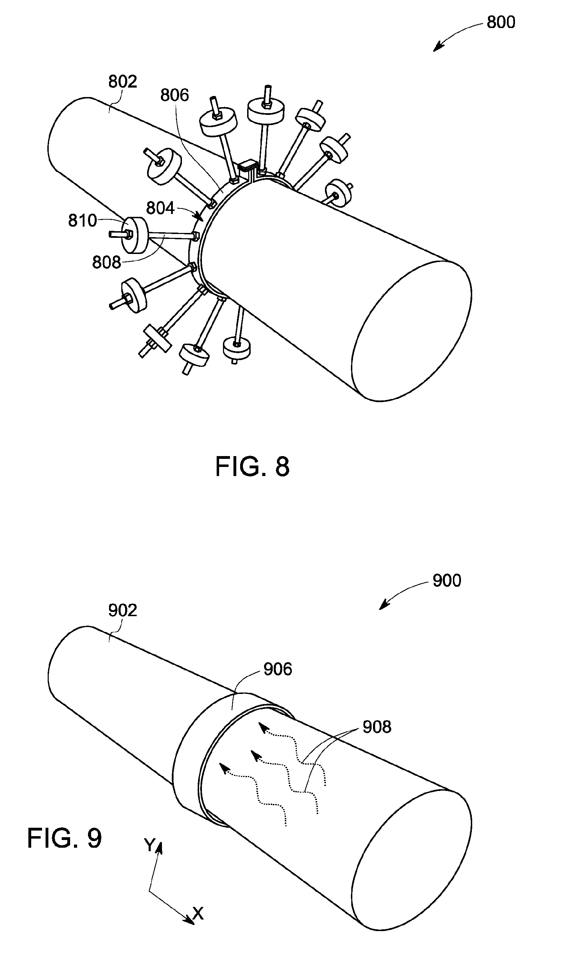

The attenuating unit 130 may be disposed or aligned at an angle of about 90 degrees to the direction of the vibrational bending waves propagating along the tower 102. For example, if the vibrational bending waves are propagating along a Y-direction, the attenuating unit 130 may be aligned along a Z-direction on the tower 102. Further, the attenuating unit 130 may be configured to reflect the vibrational bending waves towards the power unit 104. In general, the vibrational bending waves have a range of frequencies. However, only the bending waves that have frequencies above a cut-off frequency or threshold frequency are capable of radiating the tonal noise along the structural beam of the tower 102. The attenuating unit 130 may be configured to attenuate these vibrational bending waves having frequencies above the threshold frequency to suppress radiation of the tonal noise in the wind turbine 100. In one embodiment, the mass and dimension of the attenuating unit 130 may be varied to adjust the cut-off frequency or threshold frequency of the attenuating unit 130. Adjustment of the cut-off frequency of the attenuating unit 130 will be explained in greater detail with reference to FIG. 8.

Furthermore, the structural beam of the tower 102 may have a particular surface density that aids in providing uniform rotary inertia along the structural beam of the tower 102. The rotary inertia of the structural beam may be defined as the tendency of the structural beam to resist rotation while acted upon by an outside moment or force. Since the tower 102 has uniform rotary inertia, the structural beam may have a substantially uniform mechanical impedance throughout the tower 102. The substantially similar mechanical impedance allows the vibrational bending waves to propagate continuously from the upper end 110 of the tower 102 to lower end 106 of the tower 102 without any attenuation or interruption. Also, these vibrational bending waves radiate high frequency tonal noise, while propagating along one or more surfaces of the tower 102.

In accordance with exemplary aspects of the present disclosure, the attenuating unit 130 may be disposed on the structural beam of the tower 102 to attenuate the vibrational bending waves that propagate on the surfaces of the tower 102. Particularly, positioning the attenuating unit 130 having a determined mass on the structural beam may aid in varying the mass of the structural beam. Also, the dimensions of the structural beam may be modified by mounting the attenuating unit 130 on the tower 102. This change in the mass and/or dimensions of the structural beam may present a change in the rotary inertia of the structural beam. Particularly, the rotary inertia of the structural beam may abruptly change, for example, by a factor of 2 or more, because of the change in the mass and/or dimension of the structural beam. Further, this change in the rotary inertia may create a substantially large change in the mechanical impedance of the structural beam. By changing the mechanical impedance of the structural beam, the vibrational bending waves having frequencies above the cut-off or threshold frequency may be attenuated and/or reflected towards the upper end 110 of the tower 102 or the power unit 104. Since the vibrational bending waves are reflected and/or attenuated, the radiation of tonal noise from these vibrational bending waves is substantially reduced in the wind turbine 100. In one embodiment, the attenuating unit 130 may be a kit that may be operatively coupled to an existing wind turbine to attenuate the vibrational bending waves, thereby reducing tonal noise radiation in the wind turbine 100.

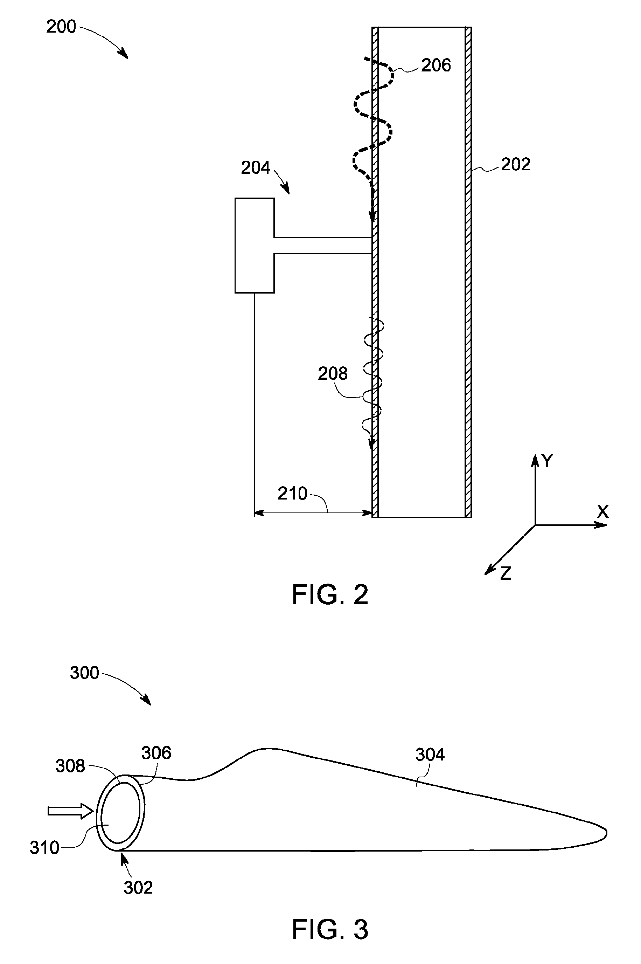

Referring to FIG. 2, a diagrammatical representation 200 of a cross-section of a portion of the tower of FIG. 1, in accordance with one embodiment of the present disclosure, is depicted. Reference numeral 202 may be representative of a structural beam in the tower 102 of FIG. 1. Further, an attenuating unit 204 may be representative of the attenuating unit 130 of FIG. 1. In the present example, the attenuating unit 204 is disposed at an upper end of the structural beam 202 proximate to a power unit that generates vibrational bending waves 206. The vibrational bending waves 206 include lower frequency bending waves and higher frequency bending waves. The lower frequency bending waves are generally representative of bending waves having frequencies below or equal to a cut-off frequency or threshold frequency, while the higher frequency bending waves are generally representative of bending waves having frequencies above the threshold frequency. The higher frequency bending waves have an amplitude that is typically above a determined level. These higher frequency bending waves radiate as tonal noise along the structural beam 202 of the tower.

In accordance with aspects of the present disclosure, the attenuating unit 204 may be configured to act as a mechanical low-pass filter to filter the vibrational bending waves 206 propagating along the structural beam 202. As depicted in FIG. 2, the attenuating unit 204 blocks or attenuates the high frequency bending waves and allows low frequency bending waves 208 to pass through. In one embodiment, the attenuating unit 204 may be formed using materials such as steel. Alternatively, the attenuating unit 204 may include concrete blocks with iron rods.

Furthermore, the attenuating unit 204 may have a radius of gyration 210. The radius of gyration 210 of the attenuating unit 204 may be defined as an effective distance of a mass point from a surface of structural beam 202, where a mass of the mass point is equal to the mass of the attenuating unit 204 and a rotary inertia of the mass point is equal to the rotary inertia of the attenuating unit 204 about the surface of structural beam 202. Also, the radius of gyration of the attenuating unit 204 about a given axis, for example, Z axis, may be represented by the following equation:

$$R_g = \sqrt{\frac{I}{m}} \qquad\qquad (1)$$

where, $R_g$ represents the radius of gyration, '$I$' represents the rotary inertia of the attenuating unit 204 about the surface of structural beam 202, and '$m$' represents the total mass of the attenuating unit 204.

Further, the radius of gyration 210 and the mass of attenuating unit 204 may be used to vary attenuation characteristics of the attenuating unit 204. For example, the radius of gyration 210 may be increased to reduce the cut-off frequency of the attenuating unit 204, which in- turn aids in attenuating the bending waves having frequencies above the reduced cut- off frequency of the attenuating unit 204. In addition, mounting the attenuating unit 204 having a determined radius of gyration 210 on the structural beam 202 aids in changing the structure of the beam 202. For example, the mass of the structural beam 202 may be varied by mounting the attenuating unit 204 having a determined mass on the structural beam 202. Further, the change in structure of the structural beam 202 introduced by the attenuating unit 204 may cause a substantially large change in the rotary inertia of the structural beam 202. This change in the rotary inertia of the structural beam 202 may in turn cause a substantially large change in mechanical impedance of the structural beam 202. Consequently, the high frequency bending waves that are susceptible to change in the mechanical impedance of the structural beam 202 are reflected towards the upper end 110 of the tower 102 of FIG. 1. Thus, by reflecting the high frequency bending waves, the attenuating unit 204 substantially reduces tonal noise radiation in the wind turbine.

Turning now to FIG. 3, a perspective view of a turbine blade 300, in accordance with aspects of the present disclosure, is depicted. For ease of understanding of the present disclosure, the turbine blade 300 is described with reference to the components of FIG. 1. The turbine blade 300 may be representative of one of the blades 126 of FIG. 1. The turbine blade 300 includes a base 302 and a face 304. The base 302 of the blade 300 is coupled to the central hub 124 of the rotor 114 as depicted in FIG. 1. The turbine blade 300 is projected outwards from the central hub 124 at locations distributed about the circumference of the central hub 124. Further, the face 304 of the blade 300 is configured to interact with passing air flow to produce lift that causes the central hub 124 to rotate about the longitudinal axis 128 of the wind turbine 100.

Moreover, the turbine blade 300 may be subjected to mechanical vibrations produced by the moving parts in the machine head 112. These mechanical vibrations are referred to as vibrational bending waves, as previously noted. The vibrational bending waves may propagate along a structural plate of the blade 300 and radiate as tonal noise.

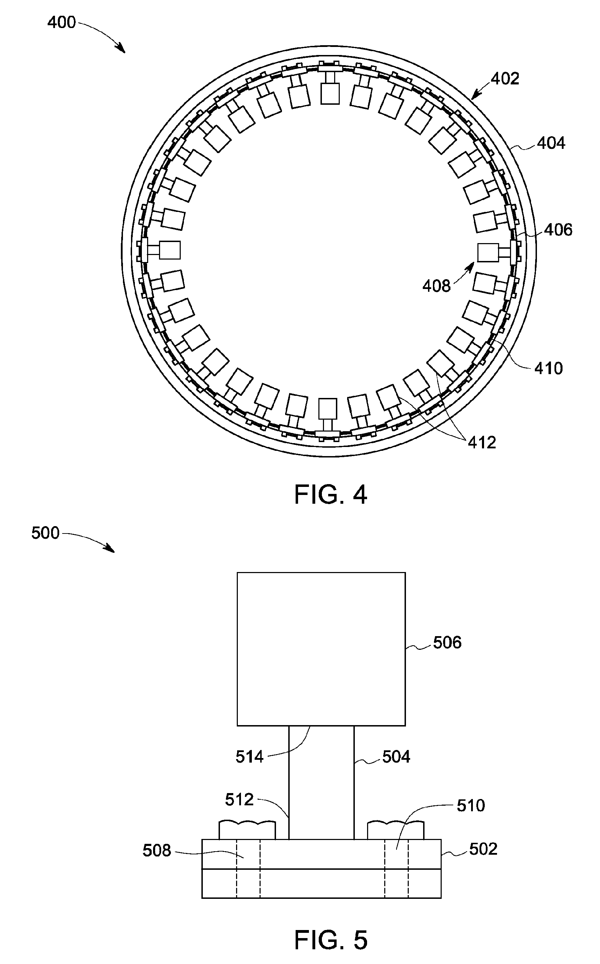

To reduce the tonal noise, in accordance with aspects of the present disclosure, the blade 300 may include an attenuating unit, such as the attenuating unit 130 (see FIG. 1). The attenuating unit 130 may be disposed at the base 302 of the blade 300 to attenuate the vibrational bending waves and consequently reduce the tonal noise in the wind turbine. The base 302 may include a rigid material between an outer circumference 306 and an inner circumference 308 of the blade 300. Also, the blade 300 has a hollow portion 310 within the inner circumference 308 of the blade 300. This hollow portion 310 may be utilized for mounting the attenuating unit, and will be described in greater detail with reference to FIG. 4.

Referring to FIG. 4, a side view of a turbine blade 400, in accordance with aspects of the present disclosure, is depicted. Typically, the turbine blade 400 includes a base 402 such as the base 302 of FIG. 3. Reference numeral 404 depicts an outer circumference of the base 402 and an inner circumference of the base 402 is represented by reference numeral 406. The outer circumference 404 of the blade 400 may be representative of the outer circumference 306 of FIG. 3. Similarly, the inner circumference 406 of the blade 400 may be representative of the inner circumference 308 of FIG. 3. Also, the turbine blade 400 may be formed using one or more structural plates.

In accordance with aspects of the present disclosure, the turbine blade 400 may include an attenuating unit 408 that is configured to attenuate and/or reflect vibrational bending waves towards a machine head, such as the machine head 112 of FIG. 1, for example. In one embodiment, the attenuating unit 408 may be disposed circumferentially along the inner circumference 406 of the base 402 of the blade 400, as depicted in FIG. 4. In another embodiment, the attenuating unit 408 may be disposed circumferentially along the outer circumference 404 of the base 402 of the blade 400. It may be noted that in yet another embodiment, the attenuating unit 408 may be disposed on both the inner circumference 406 and the outer circumference 404 of the base 402. The attenuating unit 408 may be disposed or aligned at an angle of about 90 degrees to a direction of the vibrational bending waves propagating along the turbine blade 400, for example.

In one exemplary embodiment, the attenuating unit 408 may include a mounting ring 410 and a plurality of blocking masses 412. The mounting ring 410 may be disposed at the base 402 between the inner circumference 406 and the outer circumference 404 of the base 402 of the blade 400, in one example. In addition, the mounting ring 410 may be molded with the material of the blade 400. In another embodiment, the mounting ring 410 may be disposed externally along the inner circumference 406 of the base 402 of the blade 400. The mounting ring 410 may be configured to act as a supporting structure to hold the plurality of blocking masses 412 over the blade 400. Particularly, in one embodiment, the blocking masses 412 may be fastened to the mounting ring 410 disposed on the base 402 of the blade 400. For example, the blocking masses 412 may be fastened by a bolt or a screw. The blocking masses 412 may also be welded or glued to the mounting ring 410.

Further, the plurality of blocking masses 412 may be discrete entities that are disposed serially along the inner circumference 406 of the base 402 of the blade 400, as depicted in FIG. 4. These blocking masses 412 may be employed to attenuate the vibrational bending waves generated in the power unit 104 and in the machine head 112. Particularly, the blocking masses 412 may have a determined mass and dimension. Mounting these blocking masses 412 at the base 402 of the blade 400 may be used to vary the structure of the base 402. For example, mounting the blocking masses 412 on the base 402 of the blade 400 may increase the mass of the base 402 and/or alter the dimension of the base 402. This change in the mass and/or dimension of the base 402 of the blade 400 may cause a substantially large change in rotary inertia of the blade 400.

In addition, this change in rotary inertia of the blade 400 may in turn cause a substantially large change in mechanical impedance of the structural plate at the base 402 of blade 400. This change in the mechanical impedance at the base 402 of the blade 400 may aid in attenuating and/or reflecting the vibrational bending waves toward the machine head 112. More specifically, the change in the mechanical impedance of the structural plate at the base 402 may cause the vibrational bending waves having frequencies above the cut-off frequency or threshold frequency to be reflected toward the machine head 112. However, the vibrational bending waves having frequencies below the threshold frequency may propagate across the attenuating unit 408. Since the vibrational bending waves having frequencies above the cut-off frequency are attenuated and/or reflected, radiation of high amplitude tonal noise in the wind turbine is substantially reduced.

Turning now to FIG. 5, a diagrammatical representation of a blocking mass 500, in accordance with aspects of the present disclosure, is depicted. For ease of understanding of the present disclosure, the blocking mass 500 is described with reference to the components of FIG. 4. The blocking mass 500 is representative of a blocking mass 412 of FIG. 4. In one embodiment, the blocking mass 500 may include a support platform 502, a stud 504, and a head 506. The support platform 502 is configured to fasten the blocking mass 500 to a mounting ring, such as the mounting ring 410 of FIG. 4. In another embodiment, the support platform 502 may be used to fasten the blocking mass 500 to an outer circumference, such as the outer circumference 404, or an inner circumference, such as the inner circumference 406 of the base 402 of the blade 400, or both the inner circumference 406 and the outer circumference 404 of the base 402 of the blade 400.

In accordance with aspects of the present disclosure, the support platform 502 may include apertures 508, 510 on the support platform 502. The apertures 508, 510 may be used for fastening the support platform 502 to the mounting ring 410 and/or the blade 400. For example, a bolt or screw may be inserted into the apertures 508, 510 such that the body of the bolt penetrates into the mounting ring 410 or the structural plate of the blade 400.

Further, the stud 504 may be coupled to the support platform 502 and disposed substantially perpendicular to the support platform 502. The stud 504 includes a first end 512 and a second end 514. In one example, the first end 512 may be coupled to the support platform 502, while the second end 514 may be coupled to the head 506. However, in another embodiment, the stud 504 may be directly coupled to the mounting ring 410 and disposed substantially perpendicular to the mounting ring 410. The stud 504 may be employed to position the head 506 at a determined distance from the support platform 502. Particularly, the stud 504 may be a threaded stud that is operatively coupled to a threaded structure of the head 506. For example, the head 506 may be a nut like structure that is rotated over the threaded stud 504. By rotating the head 506 over the stud 504, the distance between the support platform 502 and the head 506 may be increased or decreased to position the head 506 at a desired distance from the support platform 502. Moreover, this change in distance between the head 506 and the support platform 502 may change the radius of gyration of the attenuating unit. The change in the radius of gyration of the attenuating unit may in turn vary attenuation characteristics of the attenuating unit. For example, increasing the distance between the support platform 502 and the head 506 may increase the radius of gyration of the attenuating unit. Further, the cut-off frequency or threshold frequency of the attenuating unit is reduced with the increase in the radius of gyration. This reduced cut-off frequency may aid in attenuating vibrational bending waves having frequencies above the reduced cut-off frequency.

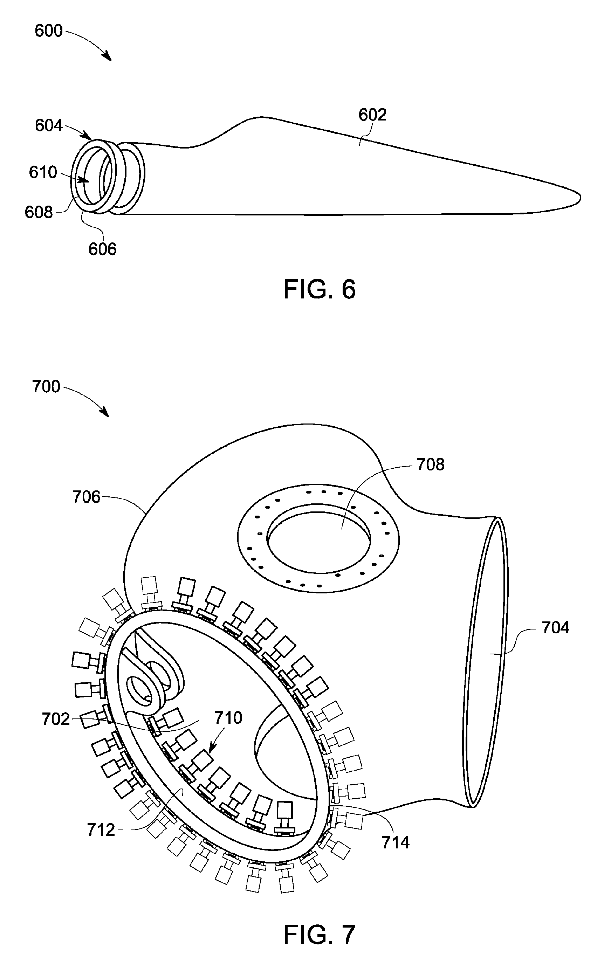

Referring now to FIG. 6, a perspective view 600 of a turbine blade 602 with a bearing ring 604, in accordance with aspects of the present disclosure, is depicted. The turbine blade 602 may be representative of the blade 300 of FIG. 3. The turbine blade 602 may be coupled to a central hub, such as the central hub 124 of FIG. 1, via the bearing ring 604. The bearing ring 604 may be used as a coupling unit for coupling the blade 602 to a corresponding slot of the central hub 124.

Moreover, the bearing ring 604 has an outer circumference 606 and an inner circumference 608 with a hollow portion 610 within the inner circumference 608. This hollow portion 610 may be utilized for circumferentially disposing an attenuating unit, such as the attenuating unit 408 of FIG. 4, along the inner circumference 608. In another embodiment, the attenuating unit may be circumferentially disposed along the outer circumference 606 of the bearing ring 604 or both on the inner circumference 608 and the outer circumference 606 of the bearing ring 604.

In one exemplary embodiment, the attenuating unit may be disposed on the bearing ring 604 to reflect and/or attenuate the vibrational bending waves having frequencies above the cut-off frequency, while allowing the vibrational bending waves having frequencies below the cut-off frequency to pass through the bearing ring 604. Since the vibrational bending waves having frequencies above the cut-off frequency are attenuated or reflected, the tonal noise that may be radiated along the structure of the bearing ring 604 and/or the blade 602 is substantially reduced.

FIG. 7 is a diagrammatic representation of a central hub 700 of a wind turbine, in accordance with aspects of the present disclosure. The central hub 700 may be representative of the central hub 124 of FIG. 1. In one embodiment, the central hub 700 includes blade slots 702, 704, 706 for holding a corresponding turbine blade, such as the turbine blade 126 of FIG. 1. The central hub 700 also includes a central slot 708 that is used for coupling the central hub 700 to a rotating shaft, such as the rotating shaft 120 via the bearing assembly 122 of FIG. 1.

In accordance with aspects of the present disclosure, an attenuating unit 710, such as the attenuating unit 408 of FIG. 4 may be disposed along an inner circumference 712, an outer circumference 714, or both the inner circumference 712 and the outer circumference 714 of the blade slots 702, 704, 706. Disposing the attenuating unit 710 on the blade slots 702, 704, 706 aids in attenuating the vibrational bending waves propagating across the central hub 700, thereby substantially reducing the tonal noise in the wind turbine. In another embodiment, the attenuating unit 710 may be disposed on or along the central slot 708 to attenuate or reflect the vibrational bending waves propagating from the machine head 112. The attenuating unit 710 may be disposed or aligned at an angle of about 90 degrees to the direction of vibrational bending waves propagating along the central hub 700.

Turning now to FIG. 8, a diagrammatic representation 800 of a tower 802 having an attenuating unit 804, in accordance with aspects of the present disclosure, is depicted. The tower 802 may be representative of the tower 102 of FIG. 1. The attenuating unit 804 is mounted on the tower 802 to reduce the tonal noise radiating along the tower 802.

In the exemplary embodiment of FIG. 8, the attenuating unit 804 includes a mounting ring 806, a plurality of threaded studs 808, and a plurality of heads 810. In the example of FIG. 8, the mounting ring 806 is disposed circumferentially along an outer circumference of the tower 802. The mounting ring 806 may be used for fastening the attenuating unit to the tower 802. Further, the threaded studs 808 are disposed substantially perpendicular to the mounting ring 806. In one example, the threaded studs 808 may have a height in a range from about 10 cm to about 50 cm. Moreover, the heads 810 are disposed on a free end of each of the threaded studs 808, as depicted in FIG. 8. The heads 810 may be nut like structures that are rotatable over the threaded studs 808 to adjust the height of the heads 810 from the mounting ring 806 or the tower 802. This adjustment of the height aids in varying the radius of gyration of the attenuating unit 804, which in turn allows a variation in the cut-off frequency.

As will be appreciated, the structure of the tower 802 may have a determined mass and dimension. Also, the tower 802 may have uniform mechanical impedance throughout the structure of the tower 802. This uniform impedance may not be susceptible to vibrational bending waves propagating along the structure of the tower 802. As the vibrational bending waves propagate along the structure of the tower 802, the vibrational bending waves may radiate tonal noise along the structure of the tower 802.

To address these problems, the attenuating unit 804 may be disposed at a determined position on the tower 802. Particularly, the attenuating unit 804 may be mounted on an upper portion of the tower 802 that receives the vibrational bending waves from a power unit, such as the power unit 104 of FIG. 1. The attenuating unit 804 is configured to suppress the vibrational bending waves, thereby reducing the tonal noise in the wind turbine.

Furthermore, the attenuating unit 804 may have a cut-off frequency or threshold frequency that is dependent upon the mass and geometry of the attenuating unit 804. The cut-off frequency may be varied by adjusting the radius of gyration of the attenuating unit 804. For example, by rotating at least one of the heads 810 over the corresponding threaded stud 808, the radius of gyration may be decreased, which in turn increases the cut-off frequency of the attenuating unit 804.

In addition, the attenuating unit 804 is configured to reflect and/or attenuate the vibrational bending waves having frequencies above the cut-off frequency. Particularly, when the attenuating unit 804 having a determined mass and/or dimension is disposed on the tower 802, the mass and/or dimension of the tower 802 are changed. This change in the mass and/or dimension of the tower 802 causes a substantially large change in rotary inertia of the tower 802. Also, the change in rotary inertia of the tower 802 may cause a substantially large change in mechanical impedance of the tower 802. This change in mechanical impedance of the tower 802 may cause the vibrational bending waves to be attenuated and/or reflected toward a source that generates these vibrational bending waves. More particularly, the change in mechanical impedance of the tower 802 may reflect the vibrational bending waves having frequencies above the cut-off frequency towards the source that generated these waves. In addition, the attenuating unit 804 allows the vibrational bending waves having frequencies below the cut-off frequency to propagate across the attenuating unit 804.

These vibrational bending waves having frequencies below the cut-off frequency may not have a high amplitude and hence may not radiate tonal noise along the surface of the tower 802. Thus, by disposing the attenuating unit 804 on the tower 802, radiation of tonal noise in the wind turbine may be substantially reduced.

Referring now to FIG. 9, a diagrammatic representation 900 of a tower 902 having an attenuating unit 906, in accordance with another embodiment of the present disclosure, is depicted. The tower 902 may be representative of the tower 102 of FIG. 1. The attenuating unit 906 is mounted on the tower 902 to reduce tonal noise radiating along the tower 902. In another embodiment, the attenuating unit 906 may be mounted on turbine blades, such as the turbine blades 126 (see FIG. 1), a central hub, such as the hub 124 (see FIG. 1), and/or a bearing ring, such as the bearing ring 604 (see FIG. 6) of the wind turbine 100. Also, in one example, the attenuating unit 906 may be in the form of a ring. It may be noted that use of other shapes for the attenuating unit 906 is also envisaged, in accordance with aspects of the present disclosure.

In the exemplary embodiment of FIG. 9, the attenuating unit 906 may include a blocking unit that has a continuously distributed mass. The continuously distributed mass may have a uniform mass and/or radius of gyration per unit length of the attenuating unit 906. Also, the attenuating unit 906 is disposed or aligned at an angle of about 90 degrees to the direction of vibrational bending waves 908 propagating along the tower 902. For example, if the vibrational bending waves 908 are propagating in an X-direction, the attenuating unit 906 may be aligned in a Y-direction on the tower 902.

In accordance with aspects of the present disclosure, the attenuating unit 906 having a determined mass and dimension is disposed on the tower 902 to vary the mass and dimension of the tower 902. This change in the mass and dimension of the tower 902 may cause a substantially large change in rotary inertia of the tower 902. Also, the change in rotary inertia of the tower 902 may cause a substantially large change in mechanical impedance of the tower 902. This change in mechanical impedance of the tower 902 may in turn cause the vibrational bending waves 908 to be attenuated and/or reflected toward a source that generates these bending waves. More particularly, the change in mechanical impedance of the tower 902 may reflect the vibrational bending waves having frequencies above the cut-off frequency toward the source that generated these waves. Thus, by disposing the attenuating unit 906 on the tower 902, radiation of tonal noise in the wind turbine may be substantially reduced.

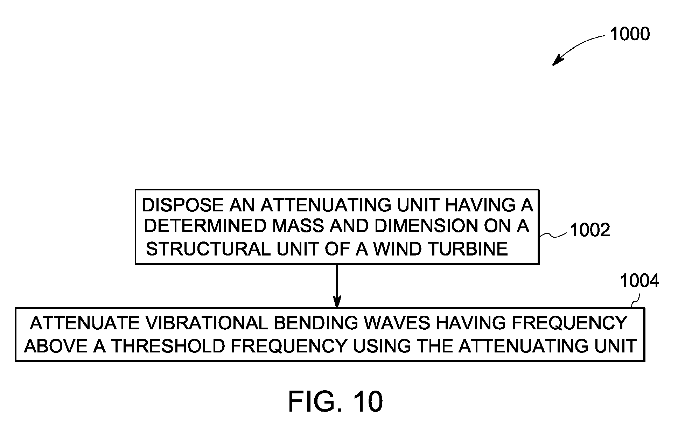

Referring now to FIG. 10, a flow chart 1000 illustrating a method for reducing tonal noise in a wind turbine, in accordance with aspects of the present disclosure, is depicted. For ease of understanding of the present disclosure, the method is described with reference to the components of FIG. 1. The method begins at step 1002, where an attenuating unit, such as the attenuating unit 130 of FIG. 1 is disposed on the tower 102 and/or the power unit 104. Particularly, the attenuating unit 130 having a determined mass and dimension may be disposed on a structural unit of the tower 102 and/or the power unit 104. In one example, the structural unit may be representative of one or more structural beams of the tower 102. In another example, the structural unit may be representative of one or more structural plates of components of the power unit 104. The components of the power unit 104 may include the central hub 124, one or more turbine blades 126 and the bearing ring 604 (see FIG. 6) coupled to the turbine blades 126. As depicted in the exemplary embodiment of FIG. 1, the attenuating unit 130 may be disposed at the upper end 110 of the tower 102. Also, in another embodiment, the attenuating unit 130 may be mounted proximate to the power unit 104 that generates the vibrational bending waves. As previously noted, the power unit 104 includes one or more moving parts that generate vibrational bending waves while converting mechanical energy to electrical energy. These vibrational bending waves propagate along the tower 102 radiating tonal noise. It is desirable to attenuate these vibrational bending waves to reduce the tonal noise in the wind turbine 100.

Accordingly, at step 1004, the vibrational bending waves having a frequency above a threshold or cut-off frequency may be attenuated by using the adjustable attenuating unit 130. The term adjustable attenuating unit, as used herein, is used to refer to an attenuating unit, the mass and dimension of which may be varied or adjusted to vary the cut-off frequency. To that end, the attenuating unit 130 having a determined mass and geometry may be employed to create a change in rotary inertia of the tower 102. For example, when the attenuating unit 130 is disposed on the structural beam of the tower 102, the structure of the structural beam is changed. This change in the structure of the structural beam may aid in creating a change in the rotary inertia of the structural beam. Further, the attenuating unit 130 may have a determined cut-off frequency or threshold frequency based on the mass and/or dimension of the attenuating unit 130.

Moreover, the change in the rotary inertia may cause a substantially large change in the mechanical impedance of the structural beam or plate. This change in the mechanical impedance of the beam/plate may attenuate the vibrational bending waves propagating along the structural beam of the tower 102 and/or the structural plate of the turbine blade 126. Particularly, the attenuating unit 130 reflects the vibrational bending waves having a frequency above the threshold frequency towards the power unit 104 and allows the low frequency bending waves to propagate along the structural beam of the tower 102 and/or the structural plate of the turbine blade 126. Furthermore, the threshold frequency of the attenuating unit 130 may be selectively adjusted by varying dimensions, weight, or a distance of a blocking mass of the attenuating unit 130 from the structural unit. For example, a stud of the attenuating unit 130 is disposed substantially perpendicular to the structural unit. Further, a head of the attenuating unit 130 is rotated along the stud to vary a distance between the head and a support platform. This change in distance between the head and the support platform may change the radius of gyration of the attenuating unit, which in turn varies the threshold frequency of the attenuating unit 130. Thus, by using the attenuating unit 130, the radiation of tonal noise in the wind turbine 100 is substantially reduced.

The various embodiments of the system and the method for attenuating vibrational bending waves in the wind turbine aid in reducing radiation of tonal noise in the wind turbine. Also, the attenuating unit is simple to design and inexpensive to fabricate and install on the wind turbine. Additionally, unlike conventional tuned mass absorbers (TMAs), use of the attenuating unit does not entail any tuning specific to an installation. The exemplary attenuating unit precludes use of expensive high-tolerance gear sets in the wind turbine. Also, the low-noise gearboxes may be easily swapped after a tonality problem has been reported. In addition, since wind turbines with the attenuating unit have lower tonal noise levels, the wind turbines can be installed in a wider range of noise sensitive sites. Moreover, the attenuating unit 130 may be a kit that may be operatively coupled to an existing wind turbine to attenuate the vibrational bending waves, thereby reducing tonal noise radiation in the wind turbine 100.

While only certain features of the invention have been illustrated and described herein, many modifications and changes will occur to those skilled in the art. It is, therefore, to be understood that the appended claims are intended to cover all such modifications and changes as fall within the true spirit of the invention.

Various aspects and embodiments of the present invention are defined by the following numbered clauses:

1. A wind turbine, comprising:

a tower;

a power unit disposed at a first end of the tower; and

an attenuating unit operatively coupled to at least one of the tower and the power unit and configured to attenuate at least a portion of vibrational bending waves from the power unit having a frequency above a threshold frequency to reduce tonal noise of the wind turbine.

2. The wind turbine of clause 1, wherein the attenuating unit is disposed on the tower and configured to attenuate the vibrational bending waves by creating a change in rotary inertia of the tower.

3. The wind turbine of any preceding clause, wherein the attenuating unit is configured to change a mechanical impedance of the tower.

4. The wind turbine of any preceding clause, wherein the attenuating unit comprises:

a mounting ring disposed on the tower; and

at least one blocking mass coupled to the mounting ring.

5. The wind turbine of any preceding clause, wherein the at least one blocking mass comprises:

a stud operatively coupled to the mounting ring and disposed substantially perpendicular to the mounting ring; and

a head operatively coupled to the stud and rotatable along the stud to vary a distance of the at least one blocking mass from the mounting ring.

6. The wind turbine of any preceding clause, further comprising a support platform coupled to the stud for fastening the stud to at least one of the mounting ring and the tower.

7. The wind turbine of any preceding clause, wherein the power unit comprises a machine head, a central hub, and a plurality of turbine blades.

8. The wind turbine of any preceding clause, wherein the attenuating unit is disposed on at least one of the machine head, the central hub, and the plurality of turbine blades.

9. The wind turbine of any preceding clause, wherein the power unit comprises a bearing ring disposed at a base of the at least one of the plurality of turbine blades.

10. The wind turbine of any preceding clause, wherein the attenuating unit is operatively coupled to the bearing ring.

11. The wind turbine of any preceding clause, wherein the attenuating unit comprises a blocking unit having a continuously distributed mass, wherein the continuously distributed mass has a uniform mass and radius of gyration per unit length of the attenuating unit.

12. The wind turbine of any preceding clause, wherein the attenuating unit is disposed substantially perpendicular to a direction of the vibrational bending waves.

13. A method for reducing tonal noise in a wind turbine, the method comprising:

attenuating vibrational bending waves having a frequency above a threshold frequency by using an adjustable attenuating unit on a structural unit of the wind turbine.

14. The method of any preceding clause, further comprising selectively adjusting the threshold frequency by varying dimensions, weight, or a distance of a blocking mass of the adjustable attenuating unit.

15. The method of any preceding clause, wherein selectively adjusting the threshold frequency comprises:

disposing a stud of the adjustable attenuating unit substantially perpendicular to the structural unit; and

rotating a head of the adjustable attenuating unit along the stud to vary the radius of gyration of the attenuating unit.

16. The method of any preceding clause, wherein attenuating the vibrational bending waves comprises reflecting the vibrational bending waves having a frequency above the threshold frequency towards a power unit.

17. The method of any preceding clause, wherein reflecting the vibrational bending waves comprises changing a mechanical impedance of the structural unit.

18. An attenuating device for reducing tonal noise in a wind turbine, the device comprising:

a support platform configured to fasten the attenuating device to a structural unit of the wind turbine;

studs operatively coupled to the support platform and disposed substantially perpendicular to the support platform; and

heads operatively coupled to the studs and rotatable along the studs to vary a distance of the heads from the support platform.

19. The attenuating device of any preceding clause, further comprising a mounting ring disposed on the structural unit and configured to fasten the support platform to the structural unit.

20. The attenuating device of any preceding clause, wherein at least one of the heads is configured to rotate along a respective threaded stud to adjust the threshold frequency of the vibrational bending waves.

**Claims**

1. A wind turbine (100), comprising:

a tower(102);
a power unit (104) disposed at a first end of the tower; and
an attenuating unit (130) operatively coupled to at least one of the tower (102) and the power unit (104) and configured to attenuate at least a portion of vibrational bending waves from the power unit having a frequency above a threshold frequency to reduce tonal noise of the wind turbine (100).

2. The wind turbine (100) of claim 1, wherein the attenuating unit (130) is disposed on the tower (102) and configured to attenuate the vibrational bending waves by creating a change in rotary inertia of the tower (102).

**3.** The wind turbine (100) of any preceding claim, wherein the attenuating unit (130) is configured to change a mechanical impedance of the tower.

**4.** The wind turbine (100) of any preceding claim, wherein the attenuating unit (130) comprises:

a mounting ring disposed on the tower (102); and
at least one blocking mass coupled to the mounting ring.

**5.** The wind turbine (100) of claim 4, wherein the at least one blocking mass comprises:

a stud operatively coupled to the mounting ring and disposed substantially perpendicular to the mounting ring; and
a head operatively coupled to the stud and rotatable along the stud to vary a distance of the at least one blocking mass from the mounting ring.

**6.** The wind turbine (100) of claim 5, further comprising a support platform coupled to the stud for fastening the stud to at least one of the mounting ring and the tower (102).

**7.** The wind turbine (100) of any preceding claim, wherein the power unit (104) comprises a bearing ring disposed at a base of the at least one of the plurality of turbine blades.

**8.** The wind turbine (00) of any preceding claim, wherein the attenuating unit (130) comprises a blocking unit having a continuously distributed mass, wherein the continuously distributed mass has a uniform mass and radius of gyration per unit length of the attenuating unit.

**9.** The wind turbine (100) of any preceding claim, wherein the attenuating unit (130) is disposed substantially perpendicular to a direction of the vibrational bending waves.

**10.** A method for reducing tonal noise in a wind turbine (100), the method comprising:

attenuating vibrational bending waves having a frequency above a threshold frequency by using an adjustable attenuating unit (130) on a structural unit of the wind turbine (100).

**11.** The method of claim 10, further comprising selectively adjusting the threshold frequency by varying dimensions, weight, or a distance of a blocking mass of the adjustable attenuating unit (130).

**12.** The method of claim 10 or claim 11, wherein selectively adjusting the threshold frequency comprises:

disposing a stud of the adjustable attenuating unit substantially perpendicular to the structural unit; and
rotating a head of the adjustable attenuating unit (130) along the stud to vary the radius of gyration of the attenuating unit.

**13.** The method of any of claims 10 to 12, wherein attenuating the vibrational bending waves comprises reflecting the vibrational bending waves having a frequency above the threshold frequency towards a power unit (104).

**14.** The method of any of claims 10 to 13, wherein reflecting the vibrational bending waves comprises changing a mechanical impedance of the structural unit.

**15.** An attenuating device (130) for reducing tonal noise in a wind turbine (100), the device comprising:

a support platform configured to fasten the attenuating device to a structural unit of the wind turbine (100);
studs operatively coupled to the support platform and disposed substantially perpendicular to the support platform; and
heads operatively coupled to the studs and rotatable along the studs to vary a distance of the heads from the support platform.

100

126

124

114

128

112    120

116

104

126

122

126

110    118

130

126

Y

X

Z

102

108    106

FIG. 1

FIG. 2

FIG. 3

400

402

404

406

408

410

412

## FIG. 4

500

506

514    504

512    510

508    502

## FIG. 5

600

604

610

608

606

602

**FIG. 6**

700

706

708

702

710

712

714

704

**FIG. 7**

800

802

806

804

810

808

FIG. 8

900

902

906

908

FIG. 9

Y

X

1000

DISPOSE AN ATTENUATING UNIT HAVING A DETERMINED MASS AND DIMENSION ON A STRUCTURAL UNIT OF A WIND TURBINE

1002

1004

ATTENUATE VIBRATIONAL BENDING WAVES HAVING FREQUENCY ABOVE A THRESHOLD FREQUENCY USING THE ATTENUATING UNIT

FIG. 10